# EUROPEAN PATENT APPLICATION

(11) **EP 3 951 430 A1**
(43) Date of publication of application: **09.02.2022**
(21) Application number: 21188325.1
(22) Date of filing: 28.07.2021
(51) Int. Cl.: G01S 13/56

(54) **LOWER POWER CONSUMPTION RADAR**

(30) Priority: 07.08.2020 US 202062706267 P
(71) Applicant: Carrier Corporation, Palm Beach Gardens, FL 33418 (US)
(72) Inventor: XIONG, Ziyou, Bloomfield 06002 (US); RAMOUTAR, Michael, Westford 01885 (US); DUBEY, Rajeev, Palm Beach Gardens 33418 (US); MAZUR, Mateusz, 80-771 Gdnask (PL); WOLSKI, Leszek, 80-771 Gdnask (PL)
(74) Representative: Dehns

(57) **Abstract**

A radar system and a method for operating a radar system are provided. The radar system includes a first radar component (110), a second radar component (120), a processing unit (130), and a controller (140). At least one of the first radar component (110) and the second radar component (120) are configured to transmit at least one monitoring wave (300). At least one of the first radar component (110) and the second radar component (120) are configured to receive at least one reflected wave (400). Each of the first radar component (110) and the second radar component (120) have an active mode and a passive mode. The processing unit (130) is configured to process at least one reflected wave signal received from at least one of the first radar component (110) and the second radar component (120). The controller (140) is configured to control (e.g., switch between active mode and passive mode) at least one of the first radar component (110) and the second radar component (120).

## Description

This invention relates to a radar system and to a related method. The system and method are advantageously for lowering the power consumption of radar.

Radar is a detection system that relies on radio waves to determine properties (e.g., range, angle, velocity, or presence) of objects. For example, radar can be used to detect vehicles, weather formations, terrain, and the presence of a human (e.g., by detecting motion, heartbeat, and/or respiration). Radar systems commonly include a transmitter, a receiver, and a processor. The transmitter produces electromagnetic waves in the radio or microwave domain and transmits the waves in a predetermined direction. When these waves contact an object, they are reflected off of the object. The receiver (which may be in the same location or a different location than the transmitter) receives the electromagnetic waves that are reflected off of the objects. Often times the electromagnetic waves are transmitted and received via the same antenna. The processor analyzes the received electromagnetic waves to determine the properties (e.g., speed, location, etc.) of the objects.

Radar-based systems commonly emit hundreds or thousands of signal segments (e.g., chirps, pulses, or constant frequency sinusoids) per second. In some applications the large emission rates are not necessary and may unnecessarily limit the potential application of the radar. For example, large transmission rates may cause the radar-based system to consume more power than is necessary to achieve the desired detection, which may prevent, or at least limit, the radar-based system from being powered by a battery. One possible remedy to high power consumption is reducing the emission rates. However, reducing emission rates may compromise temporal resolution, which is not desired.

Accordingly, there remains a need for a radar system and method for controlling such radar system that are capable of reducing power consumption (when compared to traditional radar-based systems) while maintaining acceptable temporal resolution.

Viewed from a first aspect, the present invention provides a radar system. The radar system includes a first radar component and a second radar component. At least one of the first radar component and the second radar component are configured to transmit at least one monitoring wave. At least one of the first radar component and the second radar component are configured to receive at least one reflected wave. The first radar component and the second radar component each have an active mode and a passive mode. The active mode is defined by the receiving of a power supply. The processing unit is configured to process at least one reflected wave signal received from at least one of the first radar component and the second radar component. The reflected wave signal is indicative of the at least one reflected wave. The controller is configured to control at least one of the first radar component and the second radar component. The controller maintains the first radar component and the second radar component in the active mode during a first time period and a second time period.

Optionally, passive mode is defined by at least one of: the receiving of a reduced amount of the power supply and receiving of approximately none of the power supply.

Optionally, the radar system further includes a battery, the battery configured to transmit the power supply to at least one of the first radar component and the second radar component.

Optionally, the radar system further includes a panel, the panel configured to transmit the power supply to at least one of the first radar component and the second radar component.

Optionally, the controller maintains at least one of the first radar component and the second radar component in the active mode during a third time period.

Optionally, the at least monitoring wave is transmitted and the at least one reflected wave is received during the first time period, the second time period, and the third time period.

Optionally, the first time period, the second time period, and the third time period are each respectively less than 300 microseconds.

Optionally, at least one of the first radar component and the second radar component have a warm-up period, the controller configured to maintain at least one of the first radar component and the second radar component in the active mode during the warm-up period.

Optionally, there is a first interval between the first time period and the second time period, and a second interval between the second time period and the third time period, the controller configured to switch at least one of the first radar component and the second radar component to the passive mode during at least a portion of at least one of the first interval and the second interval.

Optionally, the first interval is shorter than the second interval.

Optionally, the first interval is predefined and the second interval is variable.

Optionally, the processor is operably connected to the controller, the processor configured to increase or decrease the second interval.

Optionally, the radar system is configured to detect the presence or non-presence of a human within a building.

According to another aspect of the invention a method for operating a radar system is provided. The radar system includes a first radar component, a second radar component, a processing unit, and a controller. The first radar component and the second radar component each have an active mode and a passive mode. The method includes a step for maintaining, with the controller, the first radar component and the second radar component in the active mode during a first time period and a second time period, the active mode defined by the receiving of a power supply. The method further includes a step for switching, with the controller, at least one of the first radar component and the second radar component to the passive mode during at least a portion of a first interval, the first interval defined between the first time period and the second time period.

Optionally, the controller maintains at least one of the first radar component and the second radar component in the active mode during a third time period.

Optionally, the method further includes a step for switching, with the controller, at least one of the first radar component and the second radar component to the passive mode during at least a portion of a second interval, the second interval defined between the second time period and the third time period.

Optionally, the passive mode is defined by at least one of: the receiving of a reduced amount of the power supply and receiving of approximately none of the power supply.

Optionally, at least one of the first radar component and the second radar component have a warm-up period, the controller configured to maintain at least one of the first radar component and the second radar component in the active mode during the warm-up period.

Optionally, the first interval is predefined and the second interval is variable.

Optionally, the processor is operably connected to the controller to increase or decrease the second interval.

The subject matter of the invention is particularly pointed out and distinctly claimed in the claims at the conclusion of the specification. The following descriptions of the drawings should not be considered limiting in any way. With reference to the accompanying drawings, like elements are numbered alike:
FIG. 1 is a schematic illustration of a radar system within a building, the radar system including a first component and a second component.
FIG. 2 is a graphical illustration of the first component and the second component switching between an active mode and a passive mode.
FIG. 3 is a flow diagram illustrating a method of operating a radar system including a first component and a second component.

A radar system and a method for controlling such radar system are provided. The system and method make it possible to reduce power consumption (when compared to traditional radar-based systems) while maintaining acceptable temporal resolution. This reduction of power consumption is attributable to the turning off of components when they are not necessary (e.g., only keeping hardware components on when they are needed to transmit the small subset of signal segments and receive their reflections).

Instead of keeping all of the components of the radar-based system active (e.g., which would allow the transmission of all the signal segments) when the radar-based system is turned on, the system and method described herein selectively control (e.g., by turning off) components. For example, it has been found that a small subset of the transmitted signal segments can be used to achieve performance, while the rest of the signal segments are not necessary. Instead of transmitting these unnecessary signal segments (as is done by existing radar-based systems), the radar system described herein turns off hardware components when they are not needed. It has been found that by turning off components and avoiding the unnecessary transmission of the signal segments large percentages (e.g., between 85 and 95%) of power can be saved (when compared to traditional radar-based systems that do not turn off hardware components in this manner).

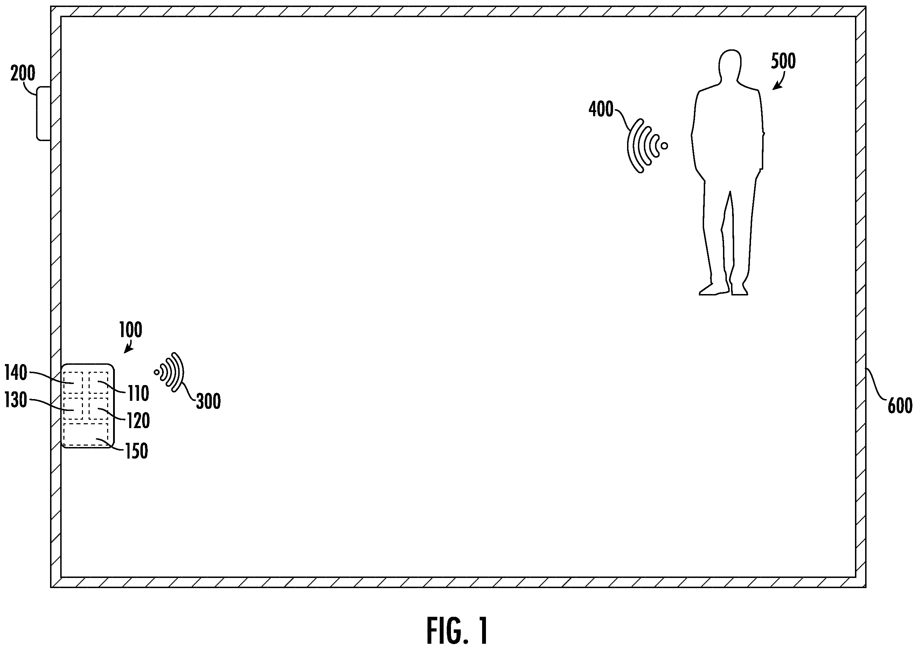

With reference now to the Figures, a schematic illustration of an exemplary radar system 100 within a building 600 is shown in FIG. 1. As shown in FIG. 1, the radar system 100 includes a first radar component 110, a second radar component 120, a processing unit 130, and a controller 140. At least one of the first radar component 110 and the second radar component 120 are configured to transmit at least one monitoring wave 300. In certain instances, the radar component that transmits the monitoring wave 300 may be referred to as a "transmitter". At least one of the first radar component 110 and the second radar component 120 are configured to receive at least one reflected wave 400. In certain instances, the radar component that receives the reflected wave 400 may be referred to as a "receiver". It is envisioned that the transmitter and the receiver may utilize the same antenna (e.g., the same antenna may be used to both transmit a monitoring wave 300 and receive a reflected wave 400). It should be appreciated that, although shown together, in certain instances, the components (e.g., the first radar component 110 and the second radar component 120) of the radar system 100 may be separate (e.g., positioned at different locations within the building 600).

Both the first radar component 110 and the second radar component 120 may have an active mode and a passive mode. The active mode may be defined by the receiving of a power supply (e.g., which may allow the radar component 110, 120 to either transmit a monitoring wave 300 or receive a reflected wave 400). The passive mode may be defined by the receiving of a reduced amount of power supply (e.g., when compared to the amount of power received when in an active mode), or by the receiving of approximately none (e.g., an immeasurable amount) of the power supply. When in a passive mode, the radar component 110, 120 may not transmit a monitoring wave 300 or receive a reflected wave 400.

The processing unit 130 is configured to process at least one reflected wave signal from at least one of the first radar component 110 and the second radar component 120. For example, the processing unit 130 may convert the reflected wave signal from analog to digital. This reflected wave signal may be indicative of at least one reflected wave. To enable the processing of the at least one reflected wave signal, the processing unit may include, but is not limited to, a single-processor or multi-processor system of any of a wide array of possible architectures, including field programmable gate array (FPGA), a central processing unit (CPU), application specific integrated circuits (ASIC), digital signal processor (DSP) or graphics processing unit (GPU) hardware arranged homogenously or heterogeneously.

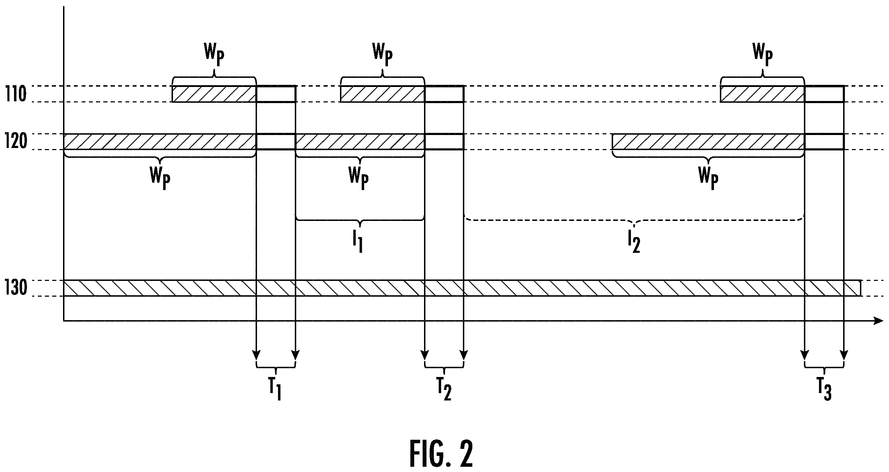

The controller 140 is configured to control at least one of the first radar component 110 and the second radar component 120. It should be appreciated that the controller 140 may be in the form of a hardware component (e.g., connected to the first radar component 110 and the second radar component 120 to control power supply to the respective component 110, 120) or software (e.g., stored in a memory operably connected to the first radar component 110 and the second radar component 120 to control power supply to the respective component 110, 120). For example, the radar system 100 may include any of the following to store the software (which may act as the controller 140): a hard disk, a random access memory (RAM), a read-only memory (ROM), an erasable programmable read-only memory (EPROM or Flash Memory), a static random access memory (SRAM), a portable compact disc read-only memory (CD-ROM), a digital versatile disk (DVD), a memory stick, and any suitable combination of the foregoing. The controller 140 (whether configured as a hardware component or software) is configured to maintain the first radar component 110 and the second radar component 120 in an active mode during a first time period T₁ and a second time period T₂. It should be appreciated that the controller 140 may also be configured to maintain the first radar component 110 and the second radar component 120 in an active mode during a third time period T₃. These time period are illustrated in FIG. 2.

It should be appreciated that at least one monitoring wave 300 is transmitted (e.g., by a transmitter) and at least one reflected wave 400 is received (e.g., by a receiver) during the first time period T₁ and the second time period T₂. When maintained in an active mode during a third time period T₃, at least one monitoring wave 300 is transmitted (e.g., by a transmitter) and at least one reflected wave 400 is received (e.g., by a receiver) during the third time period T₃. To be able to transmit the monitoring wave(s) 300 and receive the reflected wave(s) 400 during these time periods T₁, T₂, T₃ the components 110, 120 need to be fully functional during the time periods T₁, T₂, T₃. To be fully functional during the time periods T₁, T₂, T₃ the first radar component 110 and the second radar component 120 need to be in active mode at least during the time periods T₁, T₂, T₃. It should be appreciated that each of these time periods (e.g., the first time period T₁, the second time period T₂, and the third time period T₃) may be less than 300 microseconds. It is envisioned that the duration of the time periods T₁, T₂, T₃ may vary depending on the specific application of the radar system 100.

As shown in FIG. 2, at least one of the first radar component 110 and the second radar component 120 may have a warm-up period Wₚ. A warm-up period Wₚ may be viewed as an amount of time needed for a component to be on (e.g., in an active mode) prior to being able to function appropriately. For example, when acting as a transmitter, the component may need to be on for a certain amount of time before it can transmit a monitoring wave 300. To ensure that the first radar component 110 and the second radar component 120 are functional during the time periods T₁, T₂, T₃, the controller 140 is configured to maintain the first radar component 110 and the second radar component 120 in an active mode during their respective warm-up periods Wₚ. It should be appreciated that the length (e.g., amount of time) of the warm-up period Wₚ may be dependent on the type of component and/or design of the component.

In certain instances, the warm-up period Wₚ consumes at least a portion of the amount of time between time periods T₁, T₂, T₃. The amount of time period time periods may be referred to as an interval I₁, I₂. For example, in certain instances, there may be a first interval I₁ between the first time period T₁ and the second time period T₂, and a second interval I₂ between the second time period T₂ and the third time period T₃. To reduce power consumption by the radar system 100, the controller 140 is configured to switch at least one of the first radar component 110 and the second radar component 120 to a passive mode during at least a portion of at least one of the first interval I₁ and/or the second interval I₂. However, as mentioned above, the warm-up period Wₚ may consume at least a portion of the interval I₁, I₂. Consuming at least a portion of the interval I₁, I₂ may be interpreted to mean that the warm-up period Wₚ may take up at least a portion of the amount of time that the radar component 110, 120 may be in a passive mode. As such, the length of the warm-up period Wₚ may directly affect how much power can be saved.

In certain instances, the first interval I₁ is shorter than the second interval I₂. Having different lengths of time between data points may provide a more clear picture as to the properties (e.g., speed, direction, velocity, etc.) of the object (e.g., person) being observed by the radar system 100. As can be assumed, due to the second interval I₂ being longer than the first interval I₁, the first component 110 and the second component 120 may be in a passive mode for a longer period of time during the second interval I₂ than the first interval I₁.

It is envisioned that the radar system 100 may be configured with the first interval I₁ being predefined and the second interval I₂ being variable. Being predefined may mean that the length of time (e.g., consumed by the first interval I₁) is preset prior to transmission of the monitoring wave 300. Being variable may mean that the length of time (e.g., consumed by the second interval I₂) is dependent on at least one factor. For example, the length of time consumed by the second interval I₂ may be dependent on the differences between the data collected during the first time period T₁ and the data collected during the second time period T₂. In certain instances, the second interval I₂ is shorter (e.g., for a lesser amount of time) when there is a greater difference between the data collected during the first time period T₁ and the data collected during the second time period T₂. The determination of the length of the second interval I₂ may be completed in the processor 130. For example, the processor 130 may be configured to compare the data from the first time period T₁ with the data from the second time period T₂ and set the second interval I₂ accordingly. In certain instances, the processor 130 is operably coupled to the controller 140 to increase or decrease the second interval I₂.

As illustrated in FIG. 1, the radar system 100 may be configured to detect the presence or non-presence of a human 500 within a building 600. It should be appreciated that radar system 100 described herein may be useful in a variety of settings to observe different objects. Depending on the type of object being observed and the data being collected, in certain instances, the radar system 100 may include multiple (e.g., more than two) components each of which may have their own defined warm-up period Wₚ. It is envisioned that the radar system 100 may be useful in any setting in which at least some of these components may be shut off between data collection points (which may be viewed as the time periods in which the components need to be active, so as to be ready and able to collect the data).

It is envisioned that the above described radar system 100 may reduce power consumption, which may allow for greater application of the radar system 100 while also reducing the associated costs of operating/installing the radar system 100. For example, by conserving power in the above-described manner at least a portion of the power supply (which is used to transmit the monitoring wave 300 and receive/process the reflected wave 400) may be provided from a battery 150. By enabling the radar system 100 to be battery powered, the radar system 100 may be used in an increased number of settings (e.g., not limited to settings where wired power supply is available). Additionally, by reducing the amount of power consumed by a given radar system 100, the number of radar systems 100 attached to a power supplying device (e.g., a panel 200) may be increased. For example, each panel 200 may have inherent limitations as to the amount of power that can be supplied through the panel 200, which may restrict the number of radar systems 100 that can be connected to a particular panel 200. By reducing the amount of power consumed by each radar system 100, the number of radar systems 100 connected to a particular panel may be increased, which may reduce the number of panels 200 required for a given setting (e.g., commercial building 600, etc.).

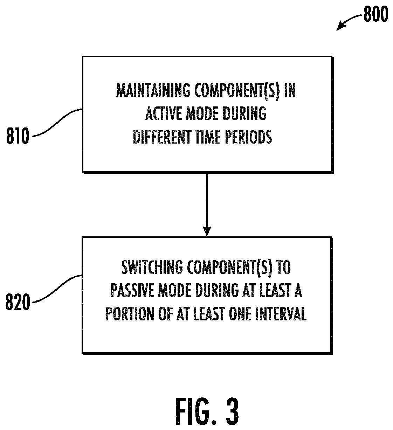

An exemplary method 800 of operating the radar system 100 is illustrated in FIG. 3. The method 800 may be performed, for example, using the exemplary radar system 100 shown in FIG. 1, which includes a first radar component 110, a second radar component 120, a processing unit 130, and a controller 140. As mentioned above, the first radar component 110 and the second radar component 120 each have an active mode and a passive mode. The active mode may be defined by the receiving of a power supply (e.g., which may allow the radar component 110, 120 to either transmit a monitoring wave 300 or receive a reflected wave 400). The passive mode may be defined by the receiving of a reduced amount of power supply (e.g., when compared to the amount of power received when in an active mode), or by the receiving of approximately none (e.g., an immeasurable amount) of the power supply. When in a passive mode, the radar component 110, 120 may not transmit a monitoring wave 300 or receive a reflected wave 400.

The method 800 includes step 810 for maintaining (e.g., with the controller 140) the first radar component 110 and the second radar component 120 in the active mode during a first time period T₁ and a second time period T₂, and, in certain instances, during a third time period T₃. The method 800 includes step 820 for switching (e.g., with the controller 140) at least one of the first radar component 110 and the second radar component 120 to the passive mode during at least a portion of a first interval I₁, and, in certain instances, during a second interval I₂. The first interval I₁ is defined between the first time period T₁ and the second time period T₂, and the second interval I₂ is defined between the second time period T₂ and the third time period T₃. As mentioned above, at least a portion of the interval I₁, I₂ may be consumed by a warm-up period Wₚ. For example, the controller 140 may be configured to maintain at least one of the first radar component 110 and the second radar component 120 in the active mode during the warm-up period. As mentioned throughout, switching the components 110, 120 to a passive mode between data collection may reduce the amount of power consumed by the radar system 100, which may allow for greater application of the radar system 100 while reducing the associated costs of operating/installing the radar system 100.

The use of the terms "a" and "and" and "the" and similar referents, in the context of describing the invention, are to be construed to cover both the singular and the plural, unless otherwise indicated herein or cleared contradicted by context. The use of any and all example, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the present invention has been described with reference to an exemplary embodiment or embodiments, it will be understood by those skilled in the art that various changes may be made and equivalents may be substituted for elements thereof without departing from the scope of the present invention, which is defined by the claims. Therefore, it is intended that the present invention not be limited to the particular embodiment disclosed as the best mode contemplated for carrying out this present invention, but that the present invention will include all embodiments falling within the scope of the claims.

## Claims

1. A radar system comprising:
a first radar component (110) and a second radar component (120), at least one of the first radar component (110) and the second radar component (120) configured to transmit at least one monitoring wave (300), and at least one of the first radar component (110) and the second radar component (120) configured to receive at least one reflected wave (400), the first radar component (110) and the second radar component (120) comprising an active mode and a passive mode, the active mode defined by the receiving of a power supply;
a processing unit (130) configured to process at least one reflected wave signal received from at least one of the first radar component (110) and the second radar component (120), the reflected wave signal indicative of the at least one reflected wave; and
a controller (140) configured to control at least one of the first radar component (110) and the second radar component (120), wherein the controller (140) maintains the first radar component (110) and the second radar component (120) in the active mode during a first time period (T₁) and a second time period (T₂).

2. The radar system of claim 1, wherein the passive mode is defined by at least one of: the receiving of a reduced amount of the power supply and receiving of approximately none of the power supply.

3. The radar system of claim 1 or 2, further comprising a battery (150), the battery configured to transmit the power supply to at least one of the first radar component (110) and the second radar component (120).

4. The radar system of claim 1, 2 or 3 further comprising a panel (200), the panel configured to transmit the power supply to at least one of the first radar component (110) and the second radar component (120).

5. The radar system of any preceding claim, wherein the controller (140) maintains at least one of the first radar component (110) and the second radar component (120) in the active mode during a third time period (T₃).

6. The radar system of claim 5, wherein the at least monitoring wave (300) is transmitted and the at least one reflected wave (400) is received during the first time period (T₁), the second time period (T₂), and the third time period (T₃).

7. The radar system of claim 6, wherein the first time period, the first time period (T₁), the second time period (T₂), and the third time period (T₃) are each respectively less than 300 microseconds.

8. The radar system of claim 5, 6 or 7, wherein at least one of the first radar component (110) and the second radar component (120) comprise a warm-up period, the controller (140) configured to maintain at least one of the first radar component (110) and the second radar component (120) in the active mode during the warm-up period.

9. The radar system of any of claims 5 to 8, further comprising a first interval (I₁) between the first time period (T₁) and the second time period (T2), and a second interval (I₂) between the second time period and the third time period (T3), the controller (140) configured to switch at least one of the first radar component (110) and the second radar component (120) to the passive mode during at least a portion of at least one of the first interval and the second interval.

10. The radar system of claim 9, wherein the first interval (I₁) is shorter than the second interval (I₂).

11. The radar system of claim 9 or 10, wherein the first interval (I₁) is predefined and the second interval (I₂) is variable.

12. The radar system of claim 11, wherein the processing unit (130) is operably connected to the controller (140), the processing unit (130) configured to increase or decrease the second interval (I₂).

13. The radar system of any preceding claim, wherein the radar system is configured to detect the presence or non-presence of a human within a building (600).

14. A method for operating a radar system comprising a first radar component (110), a second radar component (120), a processing unit (130), and a controller (140), the first radar component (110) and the second radar component (120) comprising an active mode and a passive mode, the method comprising:
maintaining, with the controller (140), the first radar component (110) and the second radar component (120) in the active mode during a first time period (Ti)and a second time period (T₂), the active mode defined by the receiving of a power supply; and
optionally switching, with the controller (140), at least one of the first radar component (110) and the second radar component (120) to the passive mode during at least a portion of a first interval (I₁), the first interval defined between the first time period and the second time period.

15. The method of claim 14, comprising use of a radar system as defined in any of claims 1 to 13.
